# EUROPEAN PATENT APPLICATION

(11) **EP 4 350 069 A1**
(43) Date of publication of application: **10.04.2024**
(21) Application number: 22810262.0
(22) Date of filing: 19.04.2022
(51) Int. Cl.: D06F 39/02, F16K 11/04

(54) **SWITCHER, DISPENSING APPARATUS, AND LAUNDRY TREATMENT EQUIPMENT**

(30) Priority: 24.05.2021 CN 202110566067; 24.05.2021 CN 202110566055; 24.05.2021 CN 202110566064
(71) Applicant: Qingdao Haier Drum Washing Machine Co., Ltd., Qingdao, Shandong 266101 (CN); HAIER SMART HOME CO., LTD., Laoshan District Qingdao Shandong 266101 (CN)
(72) Inventor: HUANG, Tao, Qingdao, Shandong 266101 (CN); CHENG, Baozhen, Qingdao, Shandong 266101 (CN); HUANG, Bencai, Qingdao, Shandong 266101 (CN)
(74) Representative: Ziebig Hengelhaupt Intellectual Property Attorneys Patentanwaltskanzlei PartGmbB
(86) International application number: PCT/CN2022/087616
(87) International publication number: WO 2022/247529

(57) **Abstract**

A switcher provided by the present invention, comprises: two or more chambers, each of the chambers being respectively provided with at least one opening; wherein, a rotating rod is configured to pass through all the chambers, the rotating rod is provided with cam portions corresponding to the different openings, the cam portions respectively drive pistons to move telescopically relative to the openings in the one-to-one manner, for controlling the sealing structures on different pistons to close or open the openings accordingly. Therefore, one switcher can be used for controlling to switch on and off, so that different mediums flow through different chambers, and one switcher can switch on and off a water channel and an air duct simultaneously, thereby increasing the application scenarios of the switcher. In addition, the present invention further provides a dispensing device equipped with the switcher, and laundry treatment appliance.

## Description

### Field

The invention belongs to the field of a laundry treatment appliance, relates to an additive dispensing apparatus for a washing machine, in particular to a switcher applied to an additive dispensing apparatus for a washing machine, and also to a laundry treatment appliance capable of treating laundry such as washing.

### Background

With the improvement of consumer's life quality, washing machine is inseparable from people's lives. User often forgets to take the laundry out of a washing machine after the washing operation is completed. If it is too long not to take laundry out, bacteria will grow in the water holding cylinder to produce an odour. Therefore, it is necessary to blow fresh air into the water holding cylinder to exchange air in the cylinder with the fresh air. But it becomes a technical problem to be urgently solved how to arrange the fresh air duct and how to control to switch the fresh air duct.

During the use of the washing machine, it is necessary to select corresponding types of additives according to the different programs to be executed, and utilize different waterways to dispense the additives into the washing machine through dispensing apparatus. In this process, the additive dispensing apparatus of the washing machine needs multiple waterways which can be switched to different combinations.

In view of this, it is a technical problem to be urgently solved how to set up a switcher which can simultaneously switch the waterway for dispensing additive and the air duct for blowing fresh air.

In view of this, the present invention is proposed.

### Summary

In order to solve the technical problem by the present invention and overcome the deficiencies of the prior art and provide a switcher, so as to switch the on-off of the paths to dispense different mediums.

In order to solve the above technical problems, the basic concept of the solutions of the present invention is as follows.

A switcher includes: two or more chambers, each of the chambers being respectively provided with at least one opening; and a rotating rod passing through all the chambers in turn. The rotating rod is provided with a plurality of cam portions corresponding to the different openings. The cam portions respectively drive the pistons to move telescopically relative to the openings in the one-to-one manner, for controlling the sealing structures on different pistons to close or open the openings accordingly.

Further, the switcher includes a water transfer chamber and an air transfer chamber, the water transfer chamber is independent from the air transfer chamber, and at least one opening is respectively provided on the water transfer chamber and the air transfer chamber.

The same one rotating rod passes through the water transfer chamber and the air transfer chamber in turn. The cam portions are respectively on the parts of the rotating rod which pass through the water transfer chamber and the air transfer chamber, for driving the pistons in the chambers to move to open and close the openings.

Further, an axis of the rotating rod is extended in a straight line, and one end of the rotating rod is connected with a power unit installed outside the transfer chamber. The power unit is used to drive the rotating rod to rotate around the axis.

Furthermore, the axes of the openings of the water transfer chamber and the air transfer chamber are all arranged along the radial direction of the rotating rod.

Further, the rotating rod is provided with a first cam portion protruding radially out in the water transfer chamber. The first cam portion drives the piston corresponding one-to-one to the first cam portion to move telescopically relative to the opening, to control the sealing structure of the piston to correspondingly close or open the opening of the air transfer chamber.

And/or, the rotating rod is provided with a second cam portion protruding radially in the air transfer chamber. The second cam portion drives the piston corresponding one-to-one to the second cam portion to move telescopically relative to the opening, to control the sealing structure of the piston to correspondingly close or open the opening of the water transfer chamber.

Further, the piston is provided with a through-hole for the rotating rod to pass through. A rib radially protruding is arranged at the position of the rotating rod where the through-hole passes, and the rib constitutes the cam portion. A distance between the protruding end of the rib and the axis of the rotating rod is greater than a radius of the through-hole. The piston and the rotating rod jointly constitute a cam transmission structure. When the rotating rod rotates to a position where the rib abuts against the inner wall of the through-hole of the piston, the piston is driven to move and the sealing structure is driven to open the opening.

Preferably, an end of the piston close to the opening is the sealing end, and the other end away from the opening is the supporting end. A sealing ring as the sealing structure is arranged on the sealing end of the piston. The supporting end of the piston is connected with a spring as the elastic unit. The spring is extended in the axis of the opening, and the two ends of the spring are connected with the supporting end of the piston and the inner wall of the housing respectively.

In addition, the present invention also provides a dispensing device, which can switch to dispense the additives of different types and have the function of switching and controlling the air duct. In order to achieve the above objective, the present invention provides a dispensing device on which the switcher described above is installed. Different openings of the at least one chamber of the switcher are respectively connected with different waterways of the dispensing device to control one of or more than one of the different additives to be dispensed to different waterways. And/or, different openings of the at least one chamber of the switcher are respectively connected with different air paths of the dispensing device to control to open and close the air ducts.

The present invention also provides a laundry treatment appliance to achieve the purpose of blowing fresh air into the water holding cylinder, reducing the growth of bacteria in the water holding cylinder and to generate odor. In order to achieve the above object, the laundry treatment appliance of the present invention is provided with any one of the above-mentioned dispensing devices.

Further, the dispensing device has two air transfer chambers, which are respectively an air inlet transfer chamber and an air outlet transfer chamber.

A bottom of the air inlet transfer chamber is provided with an air outlet which is communicated with the air inlet of the water holding cylinder by a first air duct.

The side wall of the air inlet transfer chamber is provided with an air inlet, and the air inlet is communicated with the external atmosphere through the fan installed the outside of the dispensing device, so that the fresh air in the external atmosphere is blown into the air inlet transfer chamber by the fan.

A bottom of the air outlet transfer chamber is provided with an air inlet which is communicated with the air outlet of the water holding cylinder.

The side wall of the air outlet transfer chamber is provided with an air outlet, which is communicated with the external atmosphere of the laundry treatment appliance by a second air duct.

Further, the dispensing device has a plurality of liquid storage chambers for storing different additives, and the liquid storage chambers are one-to-one communicated with different openings of the water transfer chamber through different waterways.

Further, the dispensing device has a plurality of dispensing waterways, and the inlet ends of the dispensing waterways are one-to-one connected with different openings of the water transfer chamber, and the outlet ends of the dispensing waterways are connected with the water holding cylinder.

Compared with the prior art, the present invention has the following remarkable effects by adopting the above-mentioned technical solutions.
1. When different mediums flow through different chambers, one switcher is used for simultaneously switching on and off the waterways and the air ducts, thereby increasing the application scenarios of the switcher. Through the above arrangement, the switcher can simultaneously control the waterway and the air duct, thereby increasing the application scenarios of the switcher and the functions of the switcher.
2. Through the above arrangement, a fresh air flow is directly formed by fresh air flowing to the air outlet of the fan from the outside of the water holding cylinder, flowing in the water holding cylinder through the transfer chamber, and then being discharged to the outside. So the air in the water holding cylinder can be replaced with the above-mentioned fresh air flow, it is avoided that the bacterial growth is caused by untimely drying the washed laundry in the water holding cylinder. At the same time, the air in the water holding cylinder is replaced with air being blown in by the fan, to blow air on the laundry in the water holding cylinder and improve the laundry treatment effect of laundry treatment appliance.

In order to solve the technical problem of the present invention and overcome the deficiencies of the prior art, and a laundry treatment appliance is provided for controlling ventilation in the water holding cylinder and reducing to generate odor in the water holding cylinder.

In order to solve the above technical problem, the present invention adopts the basic concept of technical solutions as follows.

A laundry treatment appliance includes, a water holding cylinder; a fan, used for generating an air flow from the outside of the water holding cylinder to the air outlet of the fan; the air inlet of the water holding cylinder being connected with the air outlet of the fan through the air inlet transfer chamber, the air outlet of the water holding cylinder being connected with the outside of the water holding cylinder through the air outlet transfer chamber; and a switcher, located in the air inlet transfer chamber and/or the air outlet transfer chamber, and used for controlling to open and close the air inlet and/or the air outlet of the water holding cylinder.

Further, the switcher includes a first control valve structure, arranged in the air inlet transfer chamber and used to control the air inlet transfer chamber to be connected with and disconnected from the air inlet of the water holding cylinder; and a second control valve structure, arranged in the air outlet transfer chamber, and being used to control the air outlet transfer chamber to be connected with and disconnected from the air outlet of the water holding cylinder.

Further, the first control valve structure and the second control valve structure are connected to a same one motor via a transmission structure. When the second control valve structure opens the air outlet of the water holding cylinder, and the first control valve structure opens the air inlet of the water holding cylinder.

Further, the air inlet transfer chamber and the air outlet transfer chamber are both arranged above the water holding cylinder. The bottom of the air inlet transfer chamber is provided with an air outlet which is connected with the air inlet of the water holding cylinder through the first air duct. The air inlet is provided on the side wall of the air inlet transfer chamber, which is connected with the air outlet of the fan. The bottom of the air outlet transfer chamber is provided with an air inlet being connected with the air outlet of the water holding cylinder. An air outlet is provided on the side wall of the air outlet transfer chamber, and is connected with the outside of the laundry treatment appliance through the second air duct.

Further, the air inlet is arranged on a top of the sidewall of one end of the water holding cylinder near the opening of the cylinder, and the air outlet is arranged on the top of the sidewall of the end of the water holding cylinder near the rear of the cylinder.

Further preferably, a window gasket is installed at the opening of the water holding cylinder, and the air inlet of the water holding cylinder is formed on the window gasket and is located on a top of the window gasket.

Further, an outlet end of the second air duct is arranged at a front panel of the laundry treatment appliance.

Further, the front panel of the laundry treatment appliance is provided with a grid portion which covers the outlet end of the second air duct, and all hollows of the grid portion constitute the air outlets respectively. The air outlets face the front of the laundry treatment device for blowing air out.

Further, the laundry treatment appliance further includes a dispensing device which is used for dispensing additives into the water holding cylinder of the laundry treatment appliance. The air inlet transfer chamber, the air outlet transfer chamber, and the fan are all installed on the dispensing device; and the air inlet transfer chamber, the air outlet transfer chamber, and the fan are all installed on the rear side of the dispensing device. Preferably, both the first air duct and the second air duct are integrally arranged on the lower side of the dispensing device.

Further, the air outlet transfer chamber is also provided with a ventilation port for communicating the air outlet transfer chamber with the external atmosphere. The switcher also includes a third control valve structure arranged in the air outlet transfer chamber, and the third control valve structure is used to control the air outlet transfer chamber to be connected with and disconnected from the ventilation port. The second control valve structure and the third control valve structure are connected to the same one motor through the transmission structure. The second control valve structure and the third control valve structure can only alternately open the air outlet and the ventilation port of the water holding cylinder. Preferably, the ventilation port is arranged at the upper of the air outlet transfer chamber.

Further, the control valve structure includes a housing, the inside of the housing is hollow to form a chamber, the housing is provided with an opening communicating with the chamber, and a piston is arranged in the chamber to telescopically move relative to the opening. A driving structure for driving the movement of the piston is installed on the housing, and is used to control the sealing structure on the piston to close or open the opening accordingly.

Further, the driving structure includes, a rotating rod, installed in the chamber and driven to rotate around an axis by the power unit; and a cam portion, arranged on the rotating rod and radially protruding outward. The cam portion and the piston at least partially overlap in the axial direction of the rotating rod. A distance between the protruding end of the cam portion and the axis of the rotating rod is greater than half of a distance between the piston and the axis of the rotating rod.

Compared with the prior art, the present invention has the following remarkable effects by adopting the above-mentioned technical solutions.

Through the above arrangement, a fresh air flow is directly formed by fresh air flowing to the air outlet of the fan from the outside of the water holding cylinder, flowing in the water holding cylinder through the transfer chamber, and then being discharged to the outside. So the air in the water holding cylinder can be replaced with the above-mentioned fresh air flow, it is avoided that the bacterial growth is caused by untimely drying the washed laundry in the water holding cylinder. At the same time, the air in the water holding cylinder is replaced with air being blown in by the fan, to blow air on the laundry in the water holding cylinder and improve the laundry treatment effect of laundry treatment appliance.

In order to solve the technical problem by the present invention and overcome the deficiencies of the prior art, and a dispensing device is also provided to realize the dual functions of controlling the dispensing of additives and the air path. At the same time, the dispensing device can realize the purpose of simultaneously switching on and off the waterway and the air duct.

In order to solve the problems of the above technical problem, the present invention adopts the basic concept of the technical solution as follows.

A dispensing device, includes a water box; and a liquid storage box being capable of being drawn and installed in the chamber of the water box in a manner of being pulled out. The gap between the water box and the liquid storage box forms an exhaust air duct, and the side of the liquid storage box facing outward is provided with an exhaust structure for communicating the exhaust air duct with the outside.

Further, a handle plate is provided on the side of the liquid storage box facing outward to be pulled by user, and an air outlet as the exhaust structure is formed on the handle plate for communicating the exhaust air duct with the outside.

Further, the air outlet is an elongated opening being extended in a horizontal direction and penetrated the handle plate from the front and the rear. The elongated opening is as a handle by which user can pull.

Further, the handle plate and the side of the liquid storage box facing outward enclose jointly an exhaust chamber, and at least the outer periphery of the exhaust chamber is provided with a hollow communicating with the front end of the exhaust air duct. Preferably, a plurality of hollows are arranged at intervals on the outer periphery of the exhaust chamber.

Further, an air chamber formed by an independent chamber is integrated with the water box. The air chamber is connected with the exhaust air duct inside the water box through an ventilation port on a top of a rear of the water box. A control valve is arranged in the air chamber for controlling to open and close the ventilation port.

Further, the air chamber is provided with a partition, and the partition divides the air chamber into two independent chambers, that is, the air inlet transfer chamber and the air outlet transfer chamber. A bottom of the air inlet transfer chamber is provided with an air outlet, and the side wall is provided with an air inlet. A bottom of the air outlet transfer chamber air inlet is provided with an air inlet, and the side wall is provided with an air outlet. Preferably, a ventilation port is also provided on the air outlet transfer chamber, and the air outlet transfer chamber is communicated with the outside atmosphere through the ventilation port.

Further, the switcher for controlling the opening and closing of each opening is provided in the air chamber. The switcher includes, a first control valve structure, arranged in the air inlet transfer chamber, and being used to control the air inlet transfer chamber to be connected with and disconnected from the air inlet of the water holding cylinder; and a second control valve structure, arranged in the air outlet transfer chamber, and being used to control the air outlet transfer chamber to be connected with and disconnected from the air outlet of the water holding cylinder. Preferably, the switcher also includes a third control valve structure, arranged in the air outlet transfer chamber, and the third control valve structure is used to control the air outlet transfer chamber to be connected with and disconnected from the ventilation port. The second control valve structure and the third control valve structure share the same rotating rod, and the rotating rod is connected with the driving motor. The second control valve structure and the third control valve structure can only alternately open the air outlet and the ventilation port of the water holding cylinder.

Further, the control valve structure includes a housing, the inside of the housing is hollow to form a chamber, the housing is provided with an opening communicating with the chamber, and a piston is arranged in the chamber to telescopically move relative to the opening. A driving structure for driving the movement of the piston is installed on the housing, and is used to control the sealing structure on the piston to close or open the opening accordingly. Preferably, the driving structure includes, a rotating rod, installed in the chamber and driven to rotate around an axis by the power unit; and a cam portion, arranged on the rotating rod and radially protruding outward. The cam portion and the piston at least partially overlap in the axial direction of the rotating rod. A distance between the protruding end of the cam portion and the axis of the rotating rod is greater than half of a distance between the piston and the axis of the rotating rod.

In addition, another object of the present invention is to provide a laundry treatment appliance to realize the purpose of controlling ventilation in the water holding cylinder and reducing the odor in the water holding cylinder. In order to achieve the above object, the laundry treatment appliance of the present invention includes a holding cylinder, and any one of the dispensing device described as the above.

Further, an air outlet is provided at the bottom of the air inlet transfer chamber of the dispensing device, and is communicated with the air inlet of the water holding cylinder through the first air duct. The side wall of the air inlet transfer chamber is provided with an air inlet which is communicated with the external atmosphere through the fan installed the outside of the dispensing device, and the fan blows the fresh air from the external atmosphere into the air inlet transfer chamber. An air inlet is provided at the bottom of the air outlet transfer chamber, and is communicated with the air outlet of the water holding cylinder. The side wall of the air outlet transfer chamber is provided with an air outlet which is communicated with the outside of the laundry treatment appliance through the second air duct.

Compared with the prior art, the present invention has the following remarkable effects by adopting the above-mentioned solutions.
1. Through the above arrangement, a fresh air flow is directly formed by fresh air flowing to the air outlet of the fan from the outside of the water holding cylinder, flowing in the water holding cylinder through the transfer chamber, and then being discharged to the outside. So the air in the water holding cylinder can be replaced with the above-mentioned fresh air flow, it is avoided that the bacterial growth is caused by untimely drying the washed laundry in the water holding cylinder. At the same time, the air in the water holding cylinder is replaced with air being blown in by the fan, to blow air on the laundry in the water holding cylinder and improve the laundry treatment effect of laundry treatment appliance.
2. Through the above arrangement, the inner space of the water box of the dispensing device has the dual functions of passing water and exhausting air, and the fresh air is guided into the laundry treatment appliance.

Simultaneously, the present invention is simple in structure, and effect is remarkable, and it is popularly applied.

The specific implementation manners of the present invention are further described in detail below in conjunction with the accompanying drawings.

### Description of drawings

Accompanying drawings, constituting a part of the present disclosure, are used for providing a further understanding of the present disclosure, schematic embodiments of the present disclosure and description thereof are used for explaining the present disclosure, and do not constitute an improper limitation on the present disclosure. Apparently, the accompanying drawings in the following description are only some embodiments, for those ordinarily skilled in the art, on the premise of no creative labor, other accompanying drawings can further be obtained from these accompanying drawings. In the figures:
Fig. 1 is a structural diagram of a switcher in an embodiment of the present invention;
Fig. 2 is a top view of the structural diagram of a switcher in an embodiment of the present invention;
Fig. 3 is a structural diagram of the A-A section of Fig. 2 in an embodiment of the present invention;
Fig. 4 is a structural diagram of the B-B section of Fig. 2 in an embodiment of the present invention;
Fig. 5 is an enlarged diagram at place C of Fig. 3 in an embodiment of the present invention;
Fig. 6a to Fig. 6d are enlarged diagrams of at place D in Fig. 4 of the rotating rod rotating to different positions in the embodiment of the present invention;
Fig. 7 is a structural diagram of the switcher, of which the cover plate of the pressure relief channel is removed, in the embodiment of the present invention;
Fig. 8 is a top view of a structural diagram of the switcher, of which the cover plate of the pressure relief channel is removed, in the embodiment of the present invention;
Fig. 9 is a structural diagram of the E-E section of Fig. 8 in an embodiment of the present invention;
Fig. 10 and Fig. 11 are structural diagrams of components of the laundry treatment appliance in different directions in the embodiment of the present invention;
Fig. 12 is a structural diagram of the F-F section of Fig. 10 in an embodiment of the present invention;
Figure 13 is a structural diagram of the G-G section of Figure 12 in the embodiment of the present invention;
Figure 14 is a structural diagram of the H-H section of Figure 13 in the embodiment of the present invention;
Fig. 15 is a structural diagram of components of the laundry treatment appliance according to another embodiment of the present invention;
Fig. 16 is a structural diagram of the J-J section of Fig. 15 in the embodiment of the present invention.

Description of main components in the figures: 100, switcher; 101, housing; 102, opening; 103, chamber; 104, piston; 105, elastic unit; 106, sealing structure; 107, guiding portion; 108, rotating rod; 109 , cam portion; 110, motor; 111, high-pressure chamber; 112, low-pressure chamber; 113, inner sealing ring; 114, outer sealing ring; 115, pressure relief chamber; 116, groove; 117, pressure relief port; 118, pressure relief channel; 119, communication port; 120, mounting hole; 121, reduction gear set; 122, pressure relief valve; 123, limiting column; 124, mounting groove; 125, sealing ring; 126, piston head; 127, protruding portion; 200, water holding cylinder; 201, air inlet; 202, air outlet; 203, front plate; 204, air outlet; 205, first control valve structure; 206, second control valve structure; 207, third control valve structure; 300, dispensing device; 301, water box; 302, liquid storage box; 303, exhaust air duct; 304, handle plate; 306, air inlet transfer chamber; 307, air outlet transfer chamber; 308, ventilation port; 309, air exhaust chamber; 310, air transfer chamber; 311, water transfer chamber; 400, fan; 401, first air duct; 402, second air duct.

It should be noted that these figures and descriptions are not intended to limit the concept scope of the present invention in any way, but illustrate the concept of the present invention for those skilled in the art by referring to specific embodiments.

### Embodiments

In order to make objects, technical solutions and advantages of the embodiments of the present invention clearer, the solutions in the embodiments are clearly and completely described as follows in combination with accompanying drawings in the embodiments of the present invention. The following embodiments are used for illustrating the present invention, rather than limiting the scope of the present invention.

In the description of the present invention, it should be noted that, the orientation or positional relationship indicated by such terms as "up", "down", "front", "rear", "left", "right", "vertical", "inner" and "outer" is the orientation or positional relationship based on the accompanying drawings. Such terms are merely used for conveniently and simplified describing the present invention, rather than indicating or implying that the device or element referred to must be located in a certain orientation or must be constructed or operated in a certain orientation. Therefore, the terms cannot be understood as a limitation to the present invention.

In the description of the present invention, it should be noted that, unless otherwise stipulated and defined definitely, such terms as "installed", "connected" and "in connection" should be understood in their broad sense, e.g., the connection can be a fixed connection, a detachable connection or an integral connection; can be mechanical connection or electrical connection; and can be direct connection or can be indirect connection through an intermediate. For those skilled in the art, specific meanings of the above terms in the present invention can be understood according to specific conditions.

A switcher 100 is used for switching directions with respective to different flow channels, water channels, and air channels, so as to achieve the effect of switching and adjusting the fluid flow direction. For example: the switcher 100 is installed on the additive dispensing apparatus of the washing machine, so that one or a combined of different types of additives can be selected to be fed, or/and one type or a combined types of additives can be dispensed in the washing machine through different water pathways and in different feeding manners.

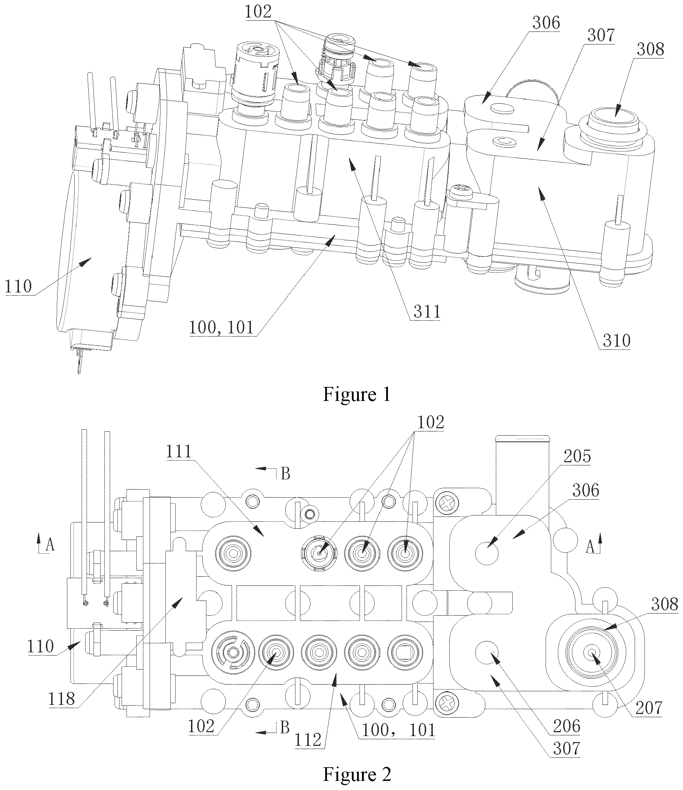

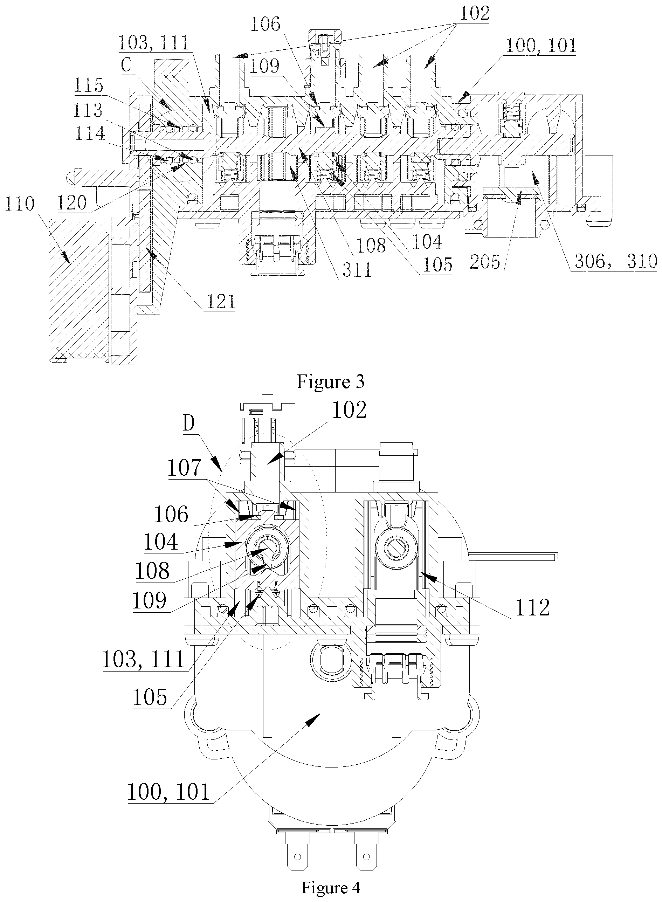

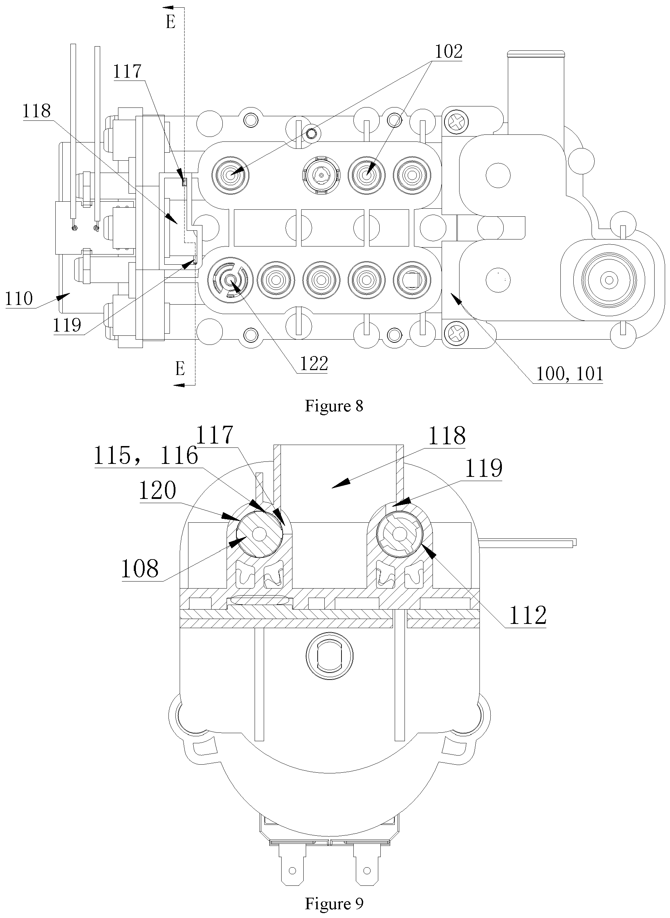

As shown in Figures 1 to 9, in the embodiment of the present invention, the switcher 100 has a housing 101, and the inside of the housing 101 is hollow to form a chamber 103. The housing 101 has a plurality of openings 102, and each of the openings 102 is communicated with the chamber 103. Some or all of the openings 102 are respectively provided with pistons 104 one by one for opening and closing the openings 102. The pistons 104 are driven to get displacements by the camshaft arranged on the switcher 100, so different openings 102 are controlled to be open and close, and the openings 102 of the switcher 100 are switched to be open or close in combination manners.

In the embodiment of the present invention, the camshaft is a rotating rod 108 installed in the chamber 103 of the housing 101 that can rotate around the shaft. A cam portion 109 arranged on the rotating rod 108 drives the piston to move, so the openings are controlled to be open and close.

In the present invention, since the opening 102 of the switcher 100 is controlled to be open and close by the movement of the piston 104, the sealing structure 106 (for example, a sealing ring, etc.) on the piston 104 is not in contact with the inner wall of the housing 101 of the switcher 100. So the situation is avoided, that the failure is resulted from the deformation the sealing structure 106 made of elastic materials such as rubber caused by friction and extrusion with the inner wall of the housing 101 of the switcher 100 during the opening and closing process.

### Embodiment 1

As shown in Figures 1 to 6, a control valve structure is described in this embodiment, and the control valve structure can be a control device for controlling to open and close the opening 102 of the switcher 100. It can also be used separately, is used in the other devices.

In this embodiment, the control valve structure includes: a housing 101, the inside of the housing 101 is hollow to form a chamber 103, the housing 101 is provided with an opening 102 communicating with the chamber 103, and a piston 104 is arranged in the chamber 103, which can telescopically move relative to the opening. A driving structure for driving the movement of the piston 104 is installed on the housing 101, and is used to control the sealing structure 106 on the piston 104 to close or open the opening 102 accordingly.

As shown in Figures 1 to 6, in this embodiment, the driving structure includes, the rotating rod 108 installed in the chamber 103 and driven to rotate around an axis by the power unit.

The rotating rod 108 is provided with a cam portion 109 radially protruding outward, the cam portion 109 and the piston 104 at least partially overlap in the axial direction of the rotating rod 108. The distance between the protruding end of the cam portion 109 and the axis of the rotating rod 108 is greater than half of the distance between the piston 104 and the axis of the rotating rod 108, so that the cam portion 109 can be used to drive the piston 104 to produce telescopic movement during the rotating process of the rotating rod 108.

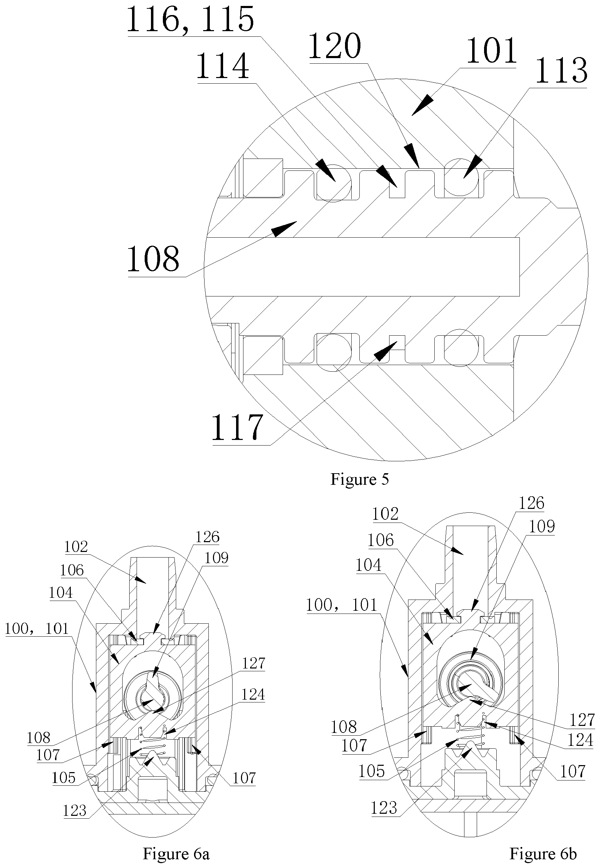

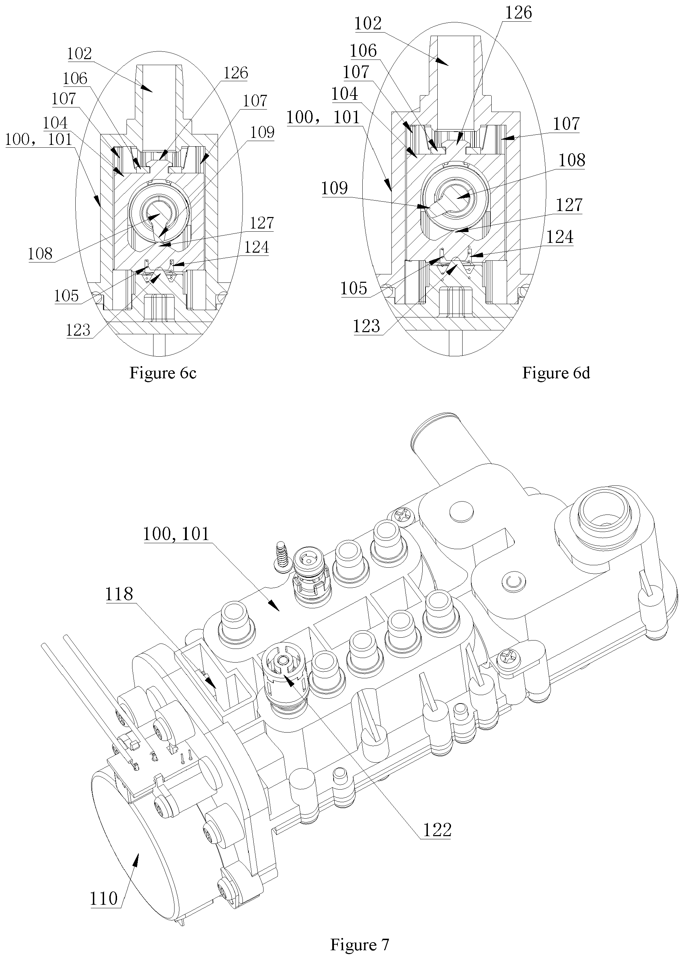

As shown in Figures 6a to 6d, in this embodiment, the piston 104 is provided with a through-hole for the rotating rod 108 to pass through, a rib radially protruding is arranged at the position of the rotating rod 108 where the through-hole passes, and the rib constitutes the cam portion 109.The piston 104 and the rotating rod 108 jointly constitute a cam transmission structure. When the rotating rod 108 rotates to a position where the rib abuts against the inner wall of the through-hole of the piston 104, the piston 104 is driven to move and the sealing structure 106 is driven to open the opening.

In this embodiment, the driving structure further includes an elastic unit 105 which is clamped between the piston 104 and the housing 101, and provides an elastic reset force on the piston 104 to make the sealing structure 106 close the opening. So when the rotating rod 108 rotates to a position where the rib is separated from the inner wall of the through-hole of the piston 104, the elastic unit 105 pushes the piston 104 to move to make the sealing structure 106 block the opening 102 correspondingly. In this embodiment, the elastic unit 105 can be a spring, a pneumatic cylinder, a hydraulic cylinder, etc., and can be any one device or a combination of devices which can provide elastic restoring force. Preferably, the elastic unit 105 in this embodiment uses a spring.

As shown in Figures 1 to 6, in this embodiment, the piston 104 is a block-shaped structure extending along the axis of the opening 102, and the middle part of the piston 104 with the block-shaped structure is provided with the through-hole penetrating both sides. The axis of the rotating rod 108 is parallel to the axial direction of the through-hole and passes through the through-hole. The part of the rotating rod 108 passing through the through-hole is provided with the rib radially protruding outward, and the rib constitutes the cam portion 109 for driving the piston 104 to move telescopically.

In this embodiment, the axial direction of the through-hole on the piston 104 is perpendicular to the axial direction of the opening 102, so that a driving force in the rotation direction of the rotating rod 108is transmitted to the piston 104 through the cam portion, and then the piston 104 can have a displacement along the radial direction of the rotating rod 108.Thereby the piston 104 telescopically moves in the axial direction of the opening 102, and correspondingly opens and closes the opening 102 by using the sealing structure on the piston 104.

In this embodiment, an end of the piston 104 close to the opening 102 is the sealing end, and the other end away from the opening 102 is the supporting end. The sealing structure 106 is arranged on the sealing end of the piston 104, the sealing structure 106 is a sealing ring 125 made of elastic materials such as rubber, and the sealing ring 125 is arranged coaxially with the opening 102 and is in sealing contact with the inner wall of the chamber 103 on the periphery of the opening 102.Thereby the opening 102 is hermetically closed. In this embodiment, the sealing end of the piston 104 is provided with a cylindrical piston head protruding outward in the axis of the opening. The sealing ring 125 is installed on the outer periphery of the piston head 126 and is fixed on the piston head 126 by an annular rib radially protruding on the piston head 126.

In this embodiment, the supporting end of the piston 104 is connected with a spring as the elastic unit 105.The spring is extended in the axis of the opening 102, and the two ends of the spring are connected with the supporting end of the piston 104 and the inner wall of the housing 101 respectively.

Preferably, in this embodiment, the sealing structure 106 and the elastic unit 105 are arranged coaxially with the piston 104, so that there is no deviation during the movement of the piston and the sealing is improved. Further preferably, the sealing structure 106 , the elastic unit 105, and the piston 104 are all arranged coaxially with the opening 102.

In this embodiment, the inner peripheral wall of the through-hole in the middle of the piston 104 is provided with a protruding portion 127 protruding radially and toward the center of the through-hole. The protruding portion 127 is arranged on the through-hole close to the supporting end, so the cam portion 109 of the rotating rod 108effectively pushes the piston 104 to effectively move due to the protruding portion 127, and the telescopic movement distance of the piston 104 is increased. Correspondingly, the sealing structure 106 on the piston 104 is controlled to effectively open and close the opening 102.

Preferably, as shown in Figures 6a to 6d, in this embodiment, the protruding portion 127 is a triangular protrusion being inclined from the left side and the right side to the center, so that the inclined surfaces on both sides can effectively guide the cam portion 109, and the situations such as imbalance are avoided during the movement of the piston 104.

As shown in Figures 6a to 6d, in this embodiment, the inner wall of the housing 101 facing the supporting end of the piston 104 is provided with a limiting column 123 that is extended in the axis of the opening 102, and one end of the spring between the supporting end of the piston 104 and the inner wall of the housing 101 is connected with the limiting column 123. In this embodiment, the supporting end of the piston 104 is provided with a mounting groove 124 which has an opening toward the limiting column 123.One end of the spring as the elastic unit 105 is inserted into the mounting groove 124, and the other end is sleeved on the outer peripheral wall of the limiting column 123.

As shown in Figures 1 to 6, in this embodiment, in the chamber 103 is provided with a guiding portion 107 which guides the piston 104 to move telescopically in the axis of the opening 102, so that the piston 104 does not telescopically move in the other directions, and can only be move in the axial direction of the opening 102.Thereby it is effectively avoided that the position of the piston 104 is deviated to not be driven by the rotating rod 108.

In this embodiment, the inner wall of the housing 101 is provided with a piston groove extending along the axial direction of the opening 102 and forming the guiding portion 107, and the side wall of the piston 104 is inserted into the piston groove correspondingly. The side wall of the piston 104 inserted into the piston groove is the wall except the sealing end of the piston and the supporting end. Preferably, the side wall of the piston 104 is parallel to the axial direction of the rotating rod 108.

In this embodiment, the left and right side walls of the piston 104 opposite to each other are respectively inserted into the piston grooves on the corresponding inner wall of the housing 101, and the piston grooves on both sides are arranged in parallel and extended in a direction parallel with the axis of the opening 102.Preferably, the piston grooves arranged on two sides is in the same section with the axis of the opening 102, to ensure that the piston 104 is kept in the axial section of the opening 102.Thereby it is effectively avoided to occur the deviation in the movement of the piston 104.

### Embodiment 2

As shown in Figures 1 to 9, a switcher 100 is described in this embodiment, including: a housing 101, the inside of the housing 101 is hollow to form a chamber 103.The housing 101 is provided with a plurality of openings 102 communicating with the chamber 103. A rotating rod 108 being capable of rotating around the axis is installed in the chamber 103. The rotating rod 108 is provided with a plurality of cam portions 109 corresponding to the different openings 102. The cam portions 109 drive the pistons 104 to move telescopically relative to the openings 102 in the one-to-one manner, for controlling the sealing structures 106 on different pistons 104 to close or open the openings 102 accordingly.

In this embodiment, the valve body structure described in the above-mentioned embodiment is arranged at each opening 102 of the switcher 100 to control the opening and closing of the opening 102, so as to control the openings 102 to be opened or closed by using a single rotating rod 108.

As shown in Figures 1 to 3, in this embodiment, the cam portions 109 are arranged on the rotating rod 108 in a staggered manner along the axial direction of the rotating rod 108, and the cam portions 109 are in a one-to-one correspondence with cross-sections of the openings 102, so the opening 102 is effectively controlled to be open and close.

Preferably, in this embodiment, the radial protruding orientations of the cam portions 109 relative to the axis of the rotating rod 108 are same or different. When the rotating rod 108 rotates around the axis to an orientation, the cam portions 109 drive the pistons 104at different openings 102 to move to separately or simultaneously open the openings.

In this embodiment, one side of the housing 101 of the switcher 100 is provided with a plurality of openings 102, and the openings 102 are arranged at intervals along a straight line. The axis of the rotating rod 108 arranged in the chamber 103 is parallel to the above-mentioned straight line. The rotating rod 108 is provided with the cam portions 109 corresponding to some or all of the openings 102 in one-to-one manner, and each of the cam portions 109 and the corresponding opening 102 are in the same section.

In this embodiment, the pistons 104 are respectively arranged at the openings 102 of the housing 101 of the switcher 100, and each of the pistons 104 is provided with the sealing structure 106 for blocking the opening 102.Each of the pistons 104 is provided with a through-hole, the rotating rod 108 passes through the through-hole in turn, and the part of the rotating rod 108 passing through the through-hole is provided with a cam portion 109 for driving the corresponding piston 104 to move.

In this embodiment, the inner wall of the through-hole of the piston 104 is provided with a protruding portion 127 that protrudes toward the center of the through-hole and abuts against the cam portion 109 correspondingly. The protruding portion 127 is arranged at a side of the inner wall of the through-hole away from the opening 102. Preferably, in this embodiment, an elastic unit 105 composed of a spring is provided between the piston 104 and the inner wall of the housing 101, and the spring takes a pushing force on the piston 104 in a direction close to the opening 102,so the sealing structure 106 such as the sealing ring arranged on the piston 104 is pushed to correspondingly close the opening 102.

This embodiment can also be set as follows. The openings 102 are respectively arranged on different walls of the housing 101 of the switcher 100. The moving directions of the pistons 104 arranged at the openings 102on the different walls are set differently. However it should be ensured as follows. The axes of the openings 102 on the side walls of the housing 101 of the switcher 100 are all perpendicular to the axis of the rotating rod 108. In order to ensure the opening and closing effect, it is preferable to adopt a vertical arrangement. But only for controlling to open and close the openings, it is only necessary that the axes of the openings 102 are intersected with the axis of the rotating rod 108. By the above arrangement, one rotating rod 108 is used to control to open and close the openings 102 on different walls, so as to switch the opening and closing status of the openings 102 in combination manner (not shown in the drawings).

In this embodiment, the switcher can also be set as follows. Two or more two rotating rods 108 are arranged in the chamber 103 of the housing 101,and each of the rotating rods 108 is provided with different or identical cam portions 109 for controlling the pistons 104 to telescopically move. The same opening 102 can be controlled to open or close by different rotating rods 108, or the different openings 102 are respectively controlled to open or close by different rotating rods 108, so that it is further increased in the number of the combination of opening and closing of the openings 102 of the switcher 100 (not indicated in the drawings).

In this embodiment, the switcher can also be set as follows. As shown in Figures 1 to 9,there are the chambers in the housing 101, at least one rotating rod 108 is arranged in each of the chambers 103, and at least one opening 102 is arranged in each of the chamber 103. The rotating rod 108 in each of the chamber pushes the piston 104 to move telescopically through the cam portion 109, to control the opening and closing of the opening 102 in the chamber 103. So the switcher 100 can separately control two or more passages.

As shown in Figures 1 to 9, in this embodiment, the housing 101 is provided with a motor 110, and the output end of the motor 110 is connected to the rotating rod 108 directly or through a transmission structure. The motor is used to drive the rotating rod 108 to rotate around the axis and control the rotation angle of the rotation rod 108, so the rotation orientation of the rotation rod 108is precisely controlled. When the rotation rod 108 is rotated to different orientations, the cam portions 109 push different pistons 104 to move to control the different openings 102on the switcher 100 to be open and close respectively.

Preferably, in this embodiment, the end of the rotating rod 108 penetrates the housing 101, and the end extending out of the housing is meshed with the output end of the motor 110 installed outside the housing through the reduction gear assembly 121, so as to accurately control the rotation of the rotating rod 108 and improve the accuracy control of the switcher 100.

### Embodiment 3

As shown in Figures 1 to 9, a switch 100 is described in this embodiment, including a housing 101 of which the inside is provided with a hollow chamber 103.The housing 101 is provided with a mounting hole 120 for the rotating rod 108 passing through. The part of the rotating rod 108 passing through the mounting hole 120 is provided with two sealing rings in turn. There is a pressure relief chamber 115 between the outer wall of the rotating rod 108between the two sealing rings and the inner wall of the mounting hole 120, and a pressure relief port 117 is formed on the housing 101 for communicating the pressure relief chamber 115 with the outside of the chamber 103.

Through the above settings, if the sealing ring of the switcher 100 does no work, the water from the place where the rotating rod 108 passes through the mounting hole can be diverted to other positions through the pressure relief chamber 115, so it is effectively avoided that the water is directly leaked from the place where the rotating rod 108 passes through. At the same time, by communicating the pressure relief chamber with the outside of the chamber through the pressure relief port, the pressure in the chamber where the rotating rod passes through the mounting hole is significantly reduced, thereby effectively preventing water from leaking from the chamber where the rotating rod passes through.

As shown in Figures 7 to 9, in this embodiment, the outer wall of the rotating rod 108 is provided with a groove 116, and the opening of the groove 116 faces the inner wall of the mounting hole 120.The groove 116 is between the two sealing rings, and the groove 116 and the inner wall of the mounting hole 120 forms the pressure relief chamber 115.The groove 116 is arranged on the outer wall of the rotating rod 108, and the groove 116 can be extended continuously or discontinuously to form at least one circle .

It is also possible in this embodiment that a groove 116 is provided on the inner wall of the mounting hole 120. The opening of the groove 116 faces the outer wall of the rotating rod 108. The groove 116 is between the two sealing rings. The groove 116 and the outer wall of the rotating rod 108 form the pressure relief chamber 115.The groove 116 is arranged on the inner wall of the mounting hole 120, and the groove 116 can be at least one circle by extending continuously or discontinuously, which can also achieve the above purpose.

In this embodiment, the outer wall of the two ends of the part where the rotating rod 108 passes through the mounting hole 120 is respectively sleeved with one sealing ring. The inner side and the outer side of the sealing ring are respectively contact with the outer wall of the rotating rod 108 and the inner wall of the mounting hole 120in a sealed manner. The sealing ring arranged near to the chamber 103 is as an inner seal ring 113, and the sealing ring arranged far away from the chamber 103 is as an outer seal ring 114.The pressure relief chamber 115 is located between the inner and outer seal rings113, 114, and is communicated with the space between the inner and outer seal ring 113, 114 are communicated.

In this embodiment, the inner wall of the mounting hole 120 is provided with a notch radially and outwardly recessed, and the notch is in the same section with the inner sealing ring 113.The notch is used to communicate with both sides of the inner sealing ring 113.Preferably, notches are arranged at intervals on the inner wall of the mounting hole 120along the circumferential direction. By the arrangement of the notches on the inner wall of the mounting hole 120 for communicating the two sides of the inner sealing ring 113, part of the water in the chamber 103 can flow into the pressure relief chamber 115 through the notches, so that water pressure in the chamber close to the place where the rotating rod 108 passes through is reduced, and the leakage faults are effectively reduced in the switcher 100.

As shown in Figures 7 to 9, in this embodiment, the housing 101 of the switcher 100 is provided with a high-pressure chamber 111 and a low-pressure chamber 112 that are independent from each other. The rotating rod 108 is arranged in the high-pressure chamber 111, the part of the rotating rod 108 passing through the high-pressure chamber 111 is provided with a pressure relief chamber 115, and the pressure relief port 117 of the pressure relief chamber 115 is communicated with the low-pressure chamber 112 through a pressure relief channel 118. Through the above arrangement, the water flowing out of the pressure relief chamber 115 can all flow into the low-pressure chamber 112, realizing the effective collection of water flow by relieving the pressure. At the same time, it can also effectively reduce the water pressure at the place of the high-pressure chamber 111 where the rotating rod 108 passes through, and it is effectively avoided to occur the situations, such as leakage of the water flow from the place where the rotating rod 108 passes through.

In this embodiment, a second rotating rod is provided in the low-pressure chamber 112, the end of the second rotating rod is in the outside of the low-pressure chamber 112, and a sealing ring is provided on the outer peripheral wall of the part of the second rotating rod 112 being in the outside of the low-pressure chamber. The low-pressure chamber 112 is provided with a communication port 119 for communicating with the pressure relief channel 118, and the communication port 119 is set close to the center of the low-pressure chamber 112 relative to the sealing ring, so that the liquid flowing out of the high-pressure chamber through the pressure relief channel can flow into the low-pressure chamber, and the water flow is effectively collected by relieving the pressure.

In this embodiment, the low-pressure chamber 112 communicates with the external atmosphere through the pressure relief port in which the pressure relief valve 122 is installed, so as to reduce the air pressure in the low-pressure chamber and be consistent with the external atmosphere. Preferably, the pressure relief port is close to the communication port 119.

In this embodiment, the structure of the switcher 100 is as the descriptions in Embodiment 1 or 2, and has the technical features of the switcher described in Embodiment 1 or 2.

### Embodiment 4

This embodiment introduces a dispensing device 300, which is provided with the switcher 100 described in any of the above-mentioned Embodiments. The different openings of the switcher 100 are respectively connected with different waterways of the dispensing device 300 to control one of or more than one of the different additives to be dispensed to different waterways, so as to increase the dispensing manners of the delivery device 300.

### Embodiment 5

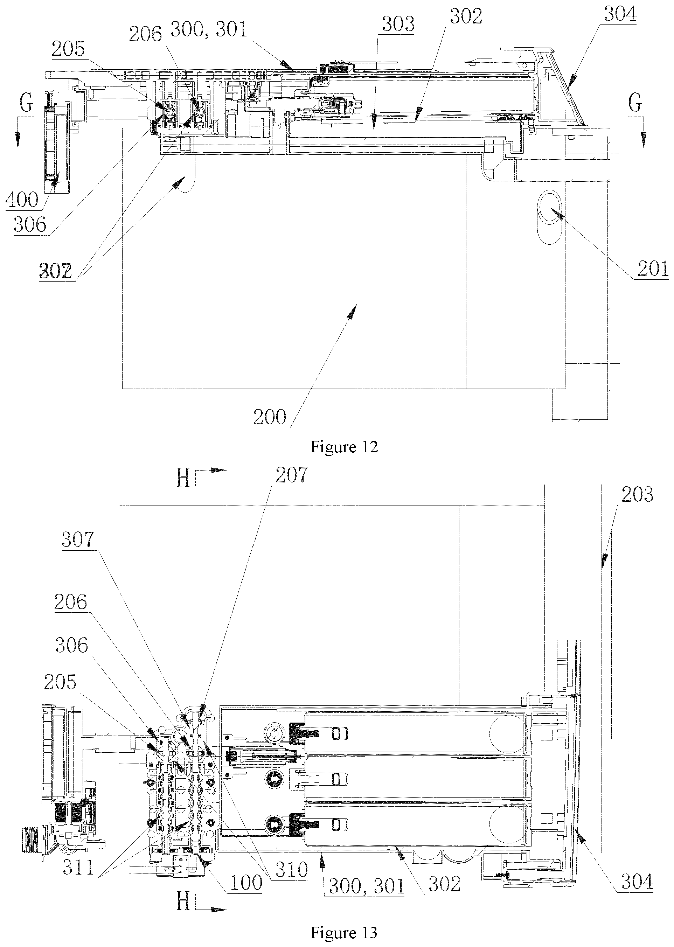

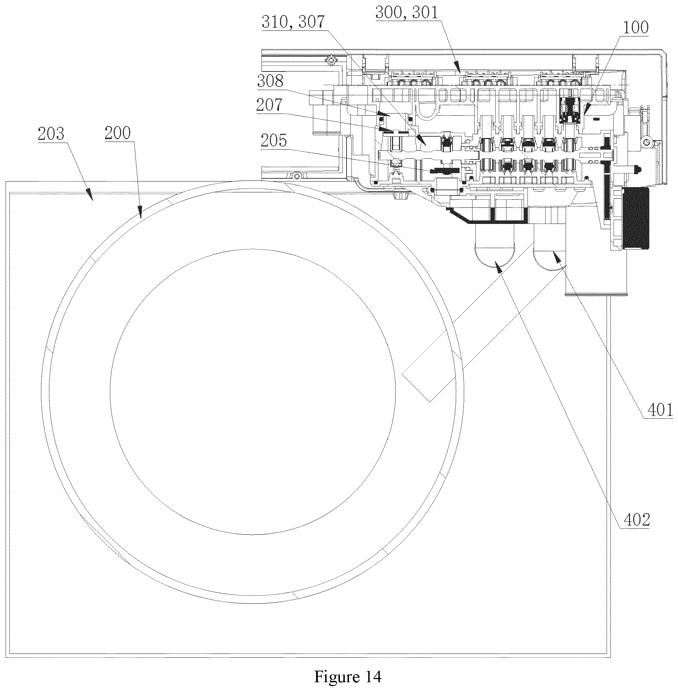

As shown in Figures 1 to 16, this embodiment introduces a switcher 100 based on the above Embodiments. The switcher includes two or more chambers 103, and each of the chambers 103 is respectively provided with at least one opening 102. The rotating rod 108 passes through all the chambers 103 successively, and the rotating rod 108 is provided with a plurality of cam portions 109 corresponding to the openings 102. The cam portions 109 drive the pistons 104 corresponding to the cam portions in one-to-one to move telescopically relative to the openings 102 respectively, so the sealing structures 106 on the pistons 104 are controlled to correspondingly close or open the openings 102. Therefore, when different mediums flow through different chambers 103, the same one switcher 100 can be used for controlling to switch on and off. So the same one switcher 100 can simultaneously switch on and off the water channels and the air channels, thereby widening the application scenarios of the switcher 100.

In this embodiment, the chambers 103 of the switcher 100 includes at least one water transfer chamber 311 and at least one air transfer chamber 310, and the water transfer chamber 311 is independent from the air transfer chamber 310. At least one opening 102 is respectively provided on the water transfer chamber 311 and the air transfer chamber 310. The same one rotating rod 108 passes through the water transfer chamber 311 and the air transfer chamber 310 in turn, and the cam portions 109 are respectively on the parts of the rotating rod 108 which pass through the water transfer chamber 311 and the air transfer chamber 310.

Through the above arrangements, the switcher 100 can simultaneously control the waterway and the airway, which increases the application scenarios of the switcher 100 and the functions of the switcher 100.

In this embodiment, the axis of the rotating rod 108 is extended in straight line, and one end of the rotating rod 108 is connected with a power unit installed the outside of the chamber 103. The power unit can be a motor 110 or the like. The power output end of the motor 110 is directly or indirectly meshed with the rotating rod through the transmission structure such as a reduction gear set 121, to drive the rotating rod 108 to rotate around the axis.

In this embodiment, the axes of the openings 102 of the water transfer chamber 311 and the air transfer chamber 310 are all arranged along the radial direction of the rotating rod 108.

In this embodiment, the rotating rod 108 is provided with at least one first cam portion protruding radially out in the water transfer chamber 311. The first cam portion drives the piston 104 corresponding one-to-one to the first cam portion to move telescopically relative to the opening 102, to control the sealing structure 106 of the piston 104 to correspondingly close or open the opening 102 of the water transfer chamber 310.

And/or, the rotating rod 108 is provided with at least one second cam portion protruding radially in the air transfer chamber 310. The second cam portion drives the piston 104 corresponding one-to-one to the second cam portion to move telescopically relative to the opening 102, to control the sealing structure 106 of the piston 104 to correspondingly close or open the opening 102 of the air transfer chamber 311.

Preferably, in this embodiment, the switcher 100 of the dispensing device 300 has two air transfer chambers 310, which are respectively the air inlet transfer chamber 306 and the air outlet transfer chamber 307. The bottom of the air inlet transfer chamber 306 is provided with an air outlet which is communicated with the air inlet 201 of the water holding cylinder by the first air duct 401. The side wall of the air inlet transfer chamber 306 is provided with an air inlet, and the air inlet is communicated with the external atmosphere through the fan 400 installed the outside of the dispensing device 300, and the fresh air in the external atmosphere is blown into the air inlet transfer chamber 306 by the fan 400. The bottom of the air outlet transfer chamber 307 is provided with an air inlet which is communicated with the air outlet 202 of the water holding cylinder. The side wall of the air outlet transfer chamber 307 is provided with an air outlet, which is communicated with the external atmosphere of the laundry treatment appliance by the second air duct.

In this embodiment, the liquid storage box, being capable of being drawn, of the dispensing device 300 has a plurality of liquid storage chambers for storing different additives, and the liquid storage chambers are one-to-one communicated with different openings 102 of the water transfer chamber 311 through different waterways. Preferably, the dispensing device 300 has a plurality of dispensing waterways, and the inlet ends of the dispensing waterways are connected with different openings 102 of the water transfer chamber 311 in one-to-one, and the outlet ends of the dispensing waterways are connected with the water holding cylinder 200, so as to dispense synchronously or asynchronously one of or more than one of additives stored in the liquid storage box into the water holding cylinder.

Preferably, in this embodiment, the dispensing device 300 has two water transfer chambers 311, a first water transfer chamber and the air inlet transfer chamber 306 are coaxially arranged, and the first rotating rod passes through the first water transfer chamber and the air inlet transfer chamber 306 in sequence. A second water transfer chamber and the air outlet transfer chamber 307 are coaxially arranged in sequence, and the second rotating rod passes through the second water transfer chamber and the air outlet transfer chamber 307 in sequence. Therefore, both the first rotating rod and the second rotating rod can control both the waterways and the air ducts. And the second control valve structure 206 and the third control valve structure 207 in the air outlet transfer chamber 307 can share the same rotating rod 108.

In this embodiment, the air outlet transfer chamber 307 is also provided with an ventilation port 308 communicating with the external atmosphere. The switcher 100 also includes a third control valve structure 207 located in the air outlet transfer chamber 307, and the third control valve structure 207 is used for controlling the air outlet transfer chamber 307 to be communicated and blocked from the ventilation port 308. The second control valve structure 206 and the third control valve structure 207 in the air outlet transfer chamber 307 share the same rotating rod 108, the rotating rod 108 is connected to the driving motor 100 through the transmission structure, and the second control valve structure 206 and the third control valve structure 207 can only alternately open the air outlet 202 of the water holding cylinder and the ventilation port 308, so as to asynchronous operate to extract air out of and blow fresh air in the laundry treatment appliance.

In this embodiment, the above-mentioned control valve structure can adopt the control valve structure described in Embodiment 1, and can also be other control valve structures in the prior art for controlling the on-off of the air duct.

### Embodiment 6

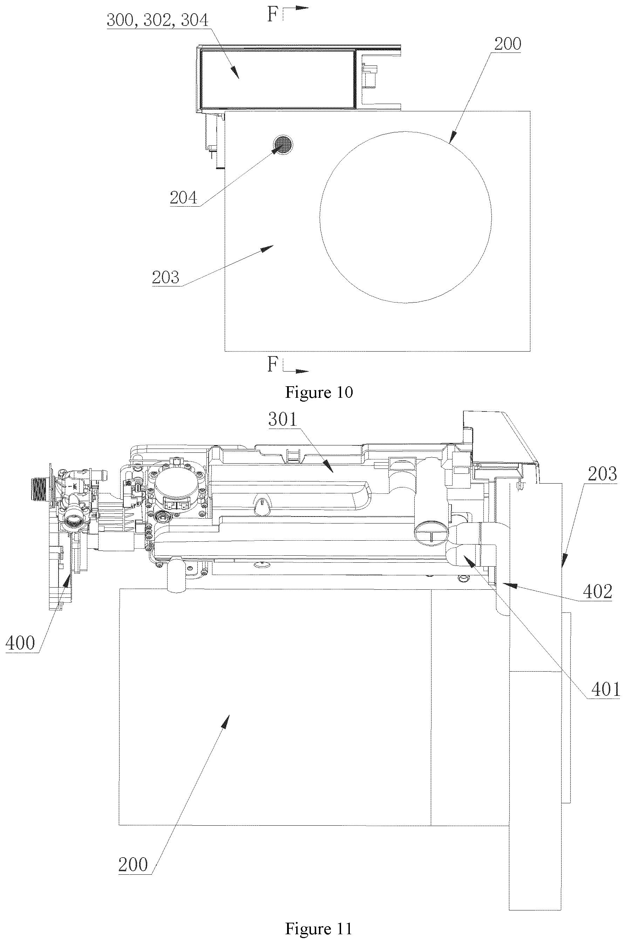

As shown in Figures 10 to 14, an embodiment of the present invention also introduces a laundry treatment appliance with the switcher described in the above embodiments, including a water holding cylinder 200 for containing washing water. The laundry in the water holding cylinder is washed by the washing water. The water holding cylinder 200 can be any structure in the prior art, such as the outer cylinder of a common washing machine, or the cylinder of a non-porous drum washing machine that forms a sealed water holding container in a washing program of a washing machine. The above-mentioned laundry treatment appliance may not only be a washing machine, but may also be a dryer, an integrated washing-drying machine, a refreshing machine, and the like.

In the embodiment of the present invention, the laundry treatment appliance is provided with a fan 400, and the fan 400 is an existing device for generating a constant air flow from the air inlet to the air outlet. The fan 400 is installed on the outside of the water holding cylinder 200 of the laundry treatment appliance. The air inlet of the water holding cylinder 200 is connected with the air outlet of the fan 400 through the air inlet transfer chamber 306, and the air outlet of the water holding cylinder 200 is connected with the outside of the water holding cylinder 200 through the air outlet transfer chamber 307. In the operation of the fan 400, the fresh air in the outside of the water holding cylinder 200 flows to the air outlet of the fan 400, flows into the water holding cylinder 200 through the transfer chamber, and then is discharged to the atmosphere, to form a fresh air flow, so that the gas in the water holding cylinder 200 can be refreshed by using the above-mentioned fresh air flow, and it is avoided that bacterium are bred on the washed laundry in the water holding cylinder 200 due to untimely drying. And the above-mentioned fan 400 is used for replacing the gas in the water holding cylinder 200, so as to operate the blowing treatment on the laundry in the water holding cylinder and improve the treatment effect of the laundry treatment appliance.

In this embodiment, both the air inlet transfer chamber 306 and the air outlet transfer chamber 307 are arranged above the water holding cylinder 200, and the bottom of the air inlet transfer chamber 306 is provided with an air outlet which is connected with the air inlet 201 of the water holding cylinder 200 through the first air duct 401. The air inlet is provided on the side wall of the air inlet transfer chamber 306, which is connected with the air outlet of the fan 400. The bottom of the air outlet transfer chamber 307 is provided with an air inlet being connected with the air outlet 202 of the water holding cylinder 200. An air outlet is provided on the side wall of the air outlet transfer chamber 307, and is connected with the outside of the laundry treatment appliance through the second air duct 402.

In this embodiment, the air inlet 201 is arranged on the top of the sidewall of one end of the water holding cylinder 200 near the opening of the cylinder, and the air outlet 202 of the water holding cylinder 200 is arranged on the top of the sidewall of the end of the water holding cylinder near the rear of the cylinder, so that the fresh air flowing into the water holding cylinder 200 can flow through all sections of the water holding cylinder 200 from front to back and then be discharged to the outside, to enhance the fresh air recovery effect of the water holding cylinder.

Preferably, in this embodiment, a window gasket is installed at the opening of the water holding cylinder 200, and the air inlet of the water holding cylinder 200 is formed on the window gasket and is located on the top of the window gasket. Preferably, the air inlet 201 of the water holding cylinder 200 faces the interior of the water holding cylinder 200, and is set obliquely downward, so that the fresh air is blown obliquely downward into the water holding cylinder 200 from the front top of the cylinder. Thereby it is increased in the coverage area of the fresh air blown in the water holding cylinder, and the fresh air ventilation of the water holding cylinder 200 is enhanced.

In this embodiment, the outlet end of the second air duct 402 is arranged at the front panel 203 on the front side of the housing of the laundry treatment appliance, so that the air flow in the water holding cylinder 200 can be directly blown outward from the front side of the laundry treatment appliance. User can directly infer the operation stage of the laundry treatment appliance based on the air flow blowing out, thereby improving the human-machine interaction effect of the laundry treatment appliance.

Preferably, in this embodiment, the front panel 203 of the laundry treatment appliance is provided with a grid portion which covers the outlet end of the second air duct 402, and all hollows of the grid portion constitute the air outlets 204 respectively. The air outlets 204 face the front of the laundry treatment device for blowing air out.

In this embodiment, the laundry treatment appliance further includes a dispensing device 300 which is used for dispensing additives into the water holding cylinder 200 of the laundry treatment appliance, so as to wash and dry the laundry in the water holding cylinder 200 by using additives. In this embodiment, the air inlet transfer chamber 306, the air outlet transfer chamber 307, and the fan 400 are all installed on the rear side of the dispensing device 300. Preferably, both the first air duct 401 and the second air duct 402 are integrally arranged on the lower side of the dispensing device 300 for communicating with the water holding cylinder 200.

In this embodiment, the air outlet transfer chamber 307 is also provided with a ventilation port 308 for communicating the air outlet transfer chamber 307 with the external atmosphere, so that the water holding cylinder 200 is directly connected with the outside through the ventilation port 308, and the air pressure in the water holding cylinder 200 is adjusted. Preferably, in this embodiment, a ventilation valve is provided at the ventilation port 308, and the ventilation valve can be opened under the pressure difference on both sides and closed under the normal state, thereby adjusting the air pressure in the water holding cylinder 200. Preferably, the ventilation port 308 is arranged on the top of the air outlet transfer chamber 307 and is opened upward.

### Embodiment 7

The difference between this embodiment and Embodiment 6 is that, the second air duct 402 is cancelled, and the air outlet of the air outlet transfer chamber 307 is directly communicated with the external atmosphere of the laundry treatment appliance through the exhaust air duct 303 formed by the gap between the water box 301 of the dispensing device 300 and the liquid storage box 302 being capable of being drawn, so that the inner space of the water box 301 of the dispensing device 300 is used for allowing the water and exhaust to simultaneously pass through. The purpose of guiding fresh air out of the laundry treatment appliance is achieved.

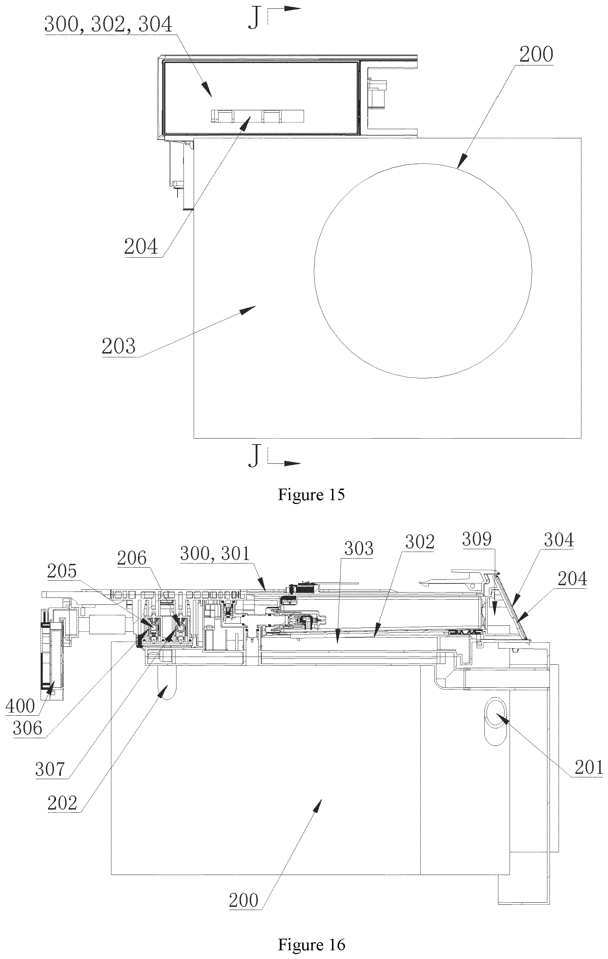

As shown in Figure 15 and Figure 16, this embodiment describes a dispensing device, which includes a water box 301 in which a chamber for passing water is formed, and a liquid storage box 302 being capable of being drawn and installed in the chamber of the water box 301 in a manner of being pulled out. The gap between the water box 301 and the liquid storage box 302 constitutes the exhaust air duct 303, and the side of the liquid storage box 302 facing outward is provided with an exhaust structure for communicating the exhaust air duct 303 with the outside.

In this embodiment, a handle plate 304 is provided on the side of the liquid storage box 302 facing outward to be pulled by user. The air outlets 204 as the exhaust structure is formed on the handle plate 304 for communicating the exhaust air duct 303 with the outside.

In this embodiment, the air outlet 204 is an elongated opening being extended in a horizontal direction and penetrated the handle plate from the front and the rear. The elongated opening may be as a handle by which user can pull in and out the liquid storage box 302. After the hand of user inserts in the elongated opening, it is convenient to pull out the liquid storage box 302.

In this embodiment, the handle plate 304 and the side of the liquid storage box 302 facing outward enclose jointly an exhaust chamber 309, and at least the outer periphery of the exhaust chamber 309 is provided with a hollow communicating with the front end of the exhaust air duct 303. Preferably, a plurality of hollows are arranged at intervals on the outer periphery of the exhaust chamber 309.

### Embodiment 8

Based on Embodiments 6 and 7, this embodiment also has the following solutions. As shown in Figures 10 to 16, a switcher 100 is also provided on the laundry treatment appliance, and arranged in the inlet transfer chamber 306 or/and the air outlet transfer chamber 307 for controlling the opening and closing of the air inlet 201 and/or the air outlet 202 of the water holding cylinder 200.

In this embodiment, the switcher 100 includes:
a first control valve structure 205, arranged in the air inlet transfer chamber 306, and being used to control the air inlet transfer chamber 306 to be connected with and disconnected from the air inlet 201 of the water holding cylinder; and
a second control valve structure 206, arranged in the air outlet transfer chamber 307, and being used to control the air outlet transfer chamber 307 to be connected with and disconnected from the air outlet 202 of the water holding cylinder.

In this embodiment, the first control valve structure 205 and the second control valve structure 206 can be connected to the same one motor 110 via a transmission structure. The second control valve structure 206 opens the air outlet 202 of the water holding cylinder, and the first control valve structure 205 simultaneously open the air inlet 201 of the water holding cylinder, so that the fresh air is allowed to get into the water storage cylinder.

In this embodiment, the switcher 100 also includes a third control valve structure 207 arranged in the air outlet transfer chamber 307, and the third control valve structure 207 is used to control the air outlet transfer chamber 307 to be connected with and disconnected from the ventilation port 308. The second control valve structure 206 and the third control valve structure 207 are connected to the same one motor 110 through the transmission structure. The second control valve structure 206 and the third control valve structure 207 can only alternately open the air outlet 202 and the ventilation port 308 of the water holding cylinder, so that the processes of ventilating and blowing the fresh air in the water holding cylinder are non-simultaneously carried out.

The above description is only a preferred embodiment of the present invention, and does not limit the present invention. Although the present invention has disclosed preferred embodiments, it is not intended to limit the present invention. Without departing from the scope of the technical solution of the present invention, anyone in the field of this patent invention can be hinted to make some changes or modifications as equivalent embodiments by the above technical content. The implementations in the above embodiments can be further combined or replaced. Any simple modification, equivalent change and modification made to the above embodiments according to the substantive content of the present invention still belong to the scope of the solution of the present invention.

## Claims

1. A switcher, comprising, two or more chambers, each of the chambers being respectively provided with at least one opening; wherein,
a rotating rod is configured to pass through all the chambers, the rotating rod is provided with cam portions corresponding to the different openings, the cam portions respectively drive pistons to move telescopically relative to the openings in the one-to-one manner, for controlling the sealing structures on different pistons to close or open the openings accordingly.

2. The switcher according to claim 1, wherein, the switcher includes a water transfer chamber and an air transfer chamber, the water transfer chamber is independent from the air transfer chamber, and at least one opening is respectively provided on the water transfer chamber and the air transfer chamber;
the same rotating rod passes through the water transfer chamber and the air transfer chamber, the cam portions are respectively on the parts of the rotating rod which pass through the water transfer chamber and the air transfer chamber, for driving the pistons in the chambers to move to open and close the openings.

3. The switcher according to claim 2, wherein, an axis of the rotating rod is extended in a straight line, and one end of the rotating rod is connected with a power unit installed outside the transfer chamber, and the power unit is used to drive the rotating rod to rotate around the axis.

4. The switcher according to any one of claims 1 to 3, wherein, axes of the openings of the water transfer chamber and the air transfer chamber are all arranged along a radial direction of the rotating rod.

5. The switcher according to any one of claims 1 to 4, wherein, the rotating rod is provided with a first cam portion protruding radially out in the water transfer chamber, the first cam portion drives the piston corresponding one-to-one to the first cam portion to move telescopically relative to the opening, to control the sealing structure of the piston to correspondingly close or open the opening of the air transfer chamber;
and/or, the rotating rod is provided with a second cam portion protruding radially in the air transfer chamber, the second cam portion drives the piston corresponding one-to-one to the second cam portion to move telescopically relative to the opening, to control the sealing structure of the piston to correspondingly close or open the opening of the water transfer chamber.

6. The switcher according to claim 5, wherein, the piston is provided with a through-hole for the rotating rod to pass through, a rib radially protruding is arranged at the position of the rotating rod where the through-hole passes, and the rib constitutes the cam portion,
a distance between the protruding end of the rib and the axis of the rotating rod is greater than a radius of the through-hole, the piston and the rotating rod jointly constitute a cam transmission structure,
when the rotating rod rotates to a position where the rib abuts against the inner wall of the through-hole of the piston, the piston is driven to move and the sealing structure is driven to open the opening.
preferably, an end of the piston close to the opening is the sealing end, and another end away from the opening is the supporting end, a sealing ring as the sealing structure is arranged on the sealing end of the piston, the supporting end of the piston is connected with a spring as an elastic unit, the spring is extended in the axis of the opening, and two ends of the spring are connected with the supporting end of the piston and the inner wall of the housing respectively.

7. A dispensing device, provided with the switcher according to any one of claims 1 to 6, wherein, different openings of at least one chamber of the switcher are respectively different waterways of the dispensing device, for controlling one of or more than one of the different additives to be dispensed to different waterways;
and/or, different openings of the at least one chamber of the switcher are respectively connected with different air paths of the dispensing device, for controlling to open and close the air ducts

8. A laundry treatment appliance, provided with the dispensing device according claim 7.

9. The laundry treatment appliance according to claim 8, wherein, the dispensing device has two air transfer chambers, which are respectively an air inlet transfer chamber and an air outlet transfer chamber;
a bottom of the air inlet transfer chamber is provided with an air outlet which is communicated with the air inlet of the water holding cylinder by a first air duct;
a side wall of the air inlet transfer chamber is provided with an air inlet, and the air inlet is communicated with the external atmosphere through a fan installed the outside of the dispensing device, so that the fresh air in the external atmosphere is blown into the air inlet transfer chamber by the fan;
a bottom of the air outlet transfer chamber is provided with an air inlet which is communicated with the air outlet of the water holding cylinder;
a side wall of the air outlet transfer chamber is provided with an air outlet, the air outlet is communicated with the external atmosphere of the laundry treatment appliance by a second air duct.

10. The laundry treatment appliance according to claim 8, wherein, the dispensing device has a plurality of liquid storage chambers for storing different additives, and the liquid storage chambers are one-to-one communicated with different openings of the water transfer chamber through different waterways;
preferably, the dispensing device has a plurality of dispensing waterways, and inlet ends of the dispensing waterways are one-to-one connected with different openings of the water transfer chamber, and outlet ends of the dispensing waterways are connected with the water holding cylinder.

11. A laundry treatment appliance, comprising, a water holding cylinder;
a fan, used for generating an air flow from the outside of the water holding cylinder to an air outlet of the fan, the air inlet of the water holding cylinder being connected with the air outlet of the fan through the air inlet transfer chamber, the air outlet of the water holding cylinder being connected with the outside of the water holding cylinder through the air outlet transfer chamber; and
a switcher, located in the air inlet transfer chamber and/or the air outlet transfer chamber, and used for controlling to open and close the air inlet and/or the air outlet of the water holding cylinder.

12. The laundry treatment appliance according to claim 11, wherein, the switcher includes, a first control valve structure, arranged in the air inlet transfer chamber and used to control the air inlet transfer chamber to be connected with and disconnected from the air inlet of the water holding cylinder; and
a second control valve structure, arranged in the air outlet transfer chamber, and being used to control the air outlet transfer chamber to be connected with and disconnected from the air outlet of the water holding cylinder.

13. The laundry treatment appliance according to claim 12, wherein, the first control valve structure and the second control valve structure are connected to a same one motor via a transmission structure,
when the second control valve structure opens the air outlet of the water holding cylinder, and the first control valve structure opens the air inlet of the water holding cylinder.

14. The laundry treatment appliance according to any one of claims 11 to 13, wherein, the air inlet transfer chamber and the air outlet transfer chamber are both arranged above the water holding cylinder;
the bottom of the air inlet transfer chamber is provided with an air outlet which is connected with the air inlet of the water holding cylinder through a first air duct;
a side wall of the air inlet transfer chamber is provided with an air inlet being connected with the air outlet of the fan;
a bottom of the air outlet transfer chamber is provided with an air inlet being connected with the air outlet of the water holding cylinder, and an air outlet is provided on the side wall of the air outlet transfer chamber and is connected with the outside of the laundry treatment appliance through a second air duct.

15. The laundry treatment appliance according to claim 12, wherein, the air inlet of the water holding cylinder is arranged on a top of the sidewall of one end of the water holding cylinder near the opening of the cylinder, and the air outlet of the water holding cylinder is arranged on a top of the sidewall of the end of the water holding cylinder near the rear of the cylinder;
preferably, a window gasket is installed at the opening of the water holding cylinder, and the air inlet of the water holding cylinder is formed on the window gasket and is located on a top of the window gasket.

16. The laundry treatment appliance according to claim 14, wherein, an outlet end of the second air duct is arranged at a front panel of the laundry treatment appliance.

17. The laundry treatment appliance according to claim 16, wherein, the front panel of the laundry treatment appliance is provided with a grid portion covering the outlet end of the second air duct, and all hollows of the grid portion constitute the air outlets respectively, the air outlets face the front of the laundry treatment device for blowing air out.

18. The laundry treatment appliance according to any one of claims 11 to 17, comprising a dispensing device, wherein, the dispensing device is used for dispensing additives into the water holding cylinder of the laundry treatment appliance,
the air inlet transfer chamber, the air outlet transfer chamber, and the fan are all installed on the dispensing device, and the air inlet transfer chamber, the air outlet transfer chamber, and the fan are all installed on the rear side of the dispensing device;
preferably, both the first air duct and the second air duct are integrally arranged on a lower of the dispensing device.

19. The laundry treatment appliance according to any one of claims 11 to 17, wherein, the air outlet transfer chamber is provided with a ventilation port for communicating the air outlet transfer chamber with the external atmosphere;
the switcher also includes a third control valve structure arranged in the air outlet transfer chamber, and the third control valve structure is used to control the air outlet transfer chamber to be connected with and disconnected from the ventilation port;
the second control valve structure and the third control valve structure are connected to the same one motor through the transmission structure, the second control valve structure and the third control valve structure alternately open the air outlet and the ventilation port of the water holding cylinder;
preferably, the ventilation port is arranged on an upper of the air outlet transfer chamber.

20. The laundry treatment appliance according to any one of claims 11 to 19, wherein, the control valve structure includes a housing, the inside of the housing is hollow to form a chamber, the housing is provided with an opening communicating with the chamber, and a piston is arranged in the chamber to telescopically move relative to the opening; a driving structure for driving the movement of the piston is installed on the housing, and is used to control the sealing structure on the piston to close or open the opening accordingly;
preferably, the driving structure includes, a rotating rod, installed in the chamber and driven to rotate around an axis by the power unit; and a cam portion, arranged on the rotating rod and radially protruding outward;
the cam portion and the piston at least partially overlap in the axial direction of the rotating rod, and a distance between the protruding end of the cam portion and the axis of the rotating rod is greater than half of a distance between the piston and the axis of the rotating rod.

21. A dispensing device, comprising, a water box; and a liquid storage box installed in the chamber of the water box in a manner of being pulled out, wherein, a gap between the water box and the liquid storage box forms an exhaust air duct, and a side of the liquid storage box facing outward is provided with an exhaust structure for communicating the exhaust air duct with the outside.

22. The dispensing device according to claim 21, wherein, a handle plate is provided on the side of the liquid storage box facing outward to be pulled by user, and an air outlet as the exhaust structure is formed on the handle plate for communicating the exhaust air duct with the outside.

23. The dispensing device according to claim 22, wherein, the air outlet is an elongated opening being extended in a horizontal direction and penetrated the handle plate from the front and the rear, so that the elongated opening is as a handle for user.

24. The dispensing device according to claim 22, wherein, the handle plate and the side of the liquid storage box facing outward enclose jointly an exhaust chamber, and at least the outer periphery of the exhaust chamber is provided with a hollow communicating with the front end of the exhaust air duct;
preferably, a plurality of hollows are arranged at intervals on the outer periphery of the exhaust chamber.

25. The dispensing device according to any one of claims 21 to 24, wherein, an air chamber formed by an independent chamber is installed on the water box, the air chamber is connected with the exhaust air duct in the water box through an ventilation port on a top of a rear of the water box, and a control valve is arranged in the air chamber for controlling to open and close the ventilation port.

26. The dispensing device according to claim 25, wherein, the air chamber is provided with a partition, and the partition divides the air chamber into two independent chambers which are the air inlet transfer chamber and the air outlet transfer chamber;
a bottom of the air inlet transfer chamber is provided with an air outlet, and a side wall is provided with an air inlet;
a bottom of the air outlet transfer chamber air inlet is provided with an air inlet, and a side wall is provided with an air outlet;
preferably, a ventilation port is also provided on the air outlet transfer chamber, and the air outlet transfer chamber is communicated with the outside atmosphere through the ventilation port.

27. The dispensing device according to claim 26, wherein, the switcher for controlling the opening and closing of each opening is provided in the air chamber, the switcher includes, a first control valve structure, arranged in the air inlet transfer chamber, and being used to control the air inlet transfer chamber to be connected with and disconnected from the air inlet of the water holding cylinder; and a second control valve structure, arranged in the air outlet transfer chamber, and being used to control the air outlet transfer chamber to be connected with and disconnected from the air outlet of the water holding cylinder;
preferably, the switcher also includes a third control valve structure, arranged in the air outlet transfer chamber, and the third control valve structure is used to control the air outlet transfer chamber to be connected with and disconnected from the ventilation port;
the second control valve structure and the third control valve structure share the same rotating rod, and the rotating rod is connected with the motor, and the second control valve structure and the third control valve structure alternately open the air outlet and the ventilation port of the water holding cylinder.

28. The dispensing device according to claim 27, wherein, the control valve structure includes a housing, the inside of the housing is hollow to form a chamber, the housing is provided with an opening communicating with the chamber, and a piston is arranged in the chamber to telescopically move relative to the opening;
a driving structure for driving the movement of the piston is installed on the housing, and is used to control the sealing structure on the piston to close or open the opening accordingly;
preferably, the driving structure includes, a rotating rod, installed in the chamber and driven to rotate around an axis by the power unit; and a cam portion, arranged on the rotating rod and radially protruding outward;
the cam portion and the piston at least partially overlap in the axial direction of the rotating rod, and a distance between the protruding end of the cam portion and the axis of the rotating rod is greater than half of a distance between the piston and the axis of the rotating rod.

29. A laundry treatment appliance, comprising a holding cylinder, and the dispensing device according to any one of claims 21 to 28.

30. The laundry treatment appliance according to claim 29, wherein, an air outlet is provided at the bottom of the air inlet transfer chamber of the dispensing device, and is communicated with the air inlet of the water holding cylinder through the first air duct,
the side wall of the air inlet transfer chamber is provided with an air inlet being communicated with the external atmosphere through the fan installed the outside of the dispensing device, so that the fan blows the fresh air from the external atmosphere into the air inlet transfer chamber;
an air inlet is provided at the bottom of the air outlet transfer chamber, and communicated with the air outlet of the water holding cylinder, the side wall of the air outlet transfer chamber is provided with an air outlet being communicated with the outside of the laundry treatment appliance through the second air duct.
